# EUROPÄISCHE PATENTSCHRIFT

(11) **EP 2 712 796 B1**
(45) Veröffentlichungstag und Bekanntmachung des Hinweises auf die Patenterteilung: **31.10.2018**
(21) Anmeldenummer: 13182848.5
(22) Anmeldetag: 03.09.2013
(51) Int. Cl.: B62K 5/10, B62K 5/08

(54) **Neigefahrzeug-Radaufhängung**
Wheel suspension for an inclining vehicle
Suspension de roue pour véhicule inclinable

(30) Priorität: 26.09.2012 DE 102012217416
(43) Veröffentlichungstag der Anmeldung: 02.04.2014
(73) Patentinhaber: Bayerische Motoren Werke Aktiengesellschaft, 80809 München (DE)
(72) Erfinder: Seidl, Josef, 84130 Dingolfing (DE)

(56) Entgegenhaltungen:
- US-A1- 2010 072 721
- US-A1- 2010 270 765

## Beschreibung

Die Erfindung betrifft eine Radaufhängung eines mehrspurigen Neigefahrzeugs.

Neigefahrzeuge unterscheiden sich von herkömmlichen Fahrzeugen dadurch, dass sich Aufbau und Fahrzeugrahmen des Fahrzeugs während einer Kurvenfahrt zur Kurveninnenseite neigen. Hierdurch wird die Bodenhaftung des Fahrzeugs während einer Kurvenfahrt erhöht, was höhere Kurvengeschwindigkeiten ermöglicht. Diese Neigetechnik verkompliziert jedoch die Radaufhängung eines Neigefahrzeugs gegenüber einem Fahrzeug ohne Neigetechnik erheblich, sodass Radaufhängungen und Achsen für Neigefahrzeuge neu entwickelt werden müssen.

Radaufhängungen für Neigefahrzeuge sind bekannt. So offenbart beispielsweise die WO 2007/127783 A1 ein Neigefahrzeug mit einer Radaufhängung mit zwei starren Querlenkerpaaren und einer Feder-Dämpfer-Einheit, die zwischen den Querlenkern des oberen Querlenkerpaares quer angeordnet ist. Stöße auf die Räder werden durch diese Feder-Dämpfer-Einheit aufgenommen, jedoch zeigt diese Art der Radaufhängung unerwünschtes Chattering.

Die US 2010/0072721 A1 offenbart eine Radaufhängung mit einem Querlenkerpaar, einem Paar Antriebswellen und einer über dem Querlenkerpaar liegenden Blattfeder. Die Blattfeder ist mit Stoßdämpfern versehen, die einerseits an der Blattfeder selbst und andererseits an einem statischen Gepäckträger befestigt sind.

Die US 2010/0270765 A1 zeigt eine Radaufhängung mit zwei starren Querlenkerpaaren und zwei Feder-Dämpfer-Einheiten, die zwischen dem Rahmen und jeweils einem der unteren Querlenkern angeordnet sind.

Chattering tritt bei Kraftfahrzeugen auf und bezeichnet ein Zittern oder schnelles Schwingen des Rades in Federrichtung. Da die Federrichtung sich überwiegend in Vertikalrichtung erstreckt, entsteht ein vertikaler Radhub, der die Bodenhaftung des Reifens in kurzen Abständen vorübergehend verringert. Zudem vermindert sich der Fahrkomfort, da die Schwingungen auch durch die Radaufhängung auf den Fahrzeugrahmen übertragen werden.

Der vorliegenden Erfindung liegt die Aufgabe zugrunde, eine Radaufhängung für Neigefahrzeuge, insbesondere ein drei- oder vierrädriges motorradähnliches Fahrzeug, bereitzustellen, die Chattering effektiv dämpft und damit die Fahrsicherheit und den Fahrkomfort des Neigefahrzeugs erhöht. Zudem soll diese Aufhängung ein Minimum an Teilen aufweisen und kostengünstig herzustellen sein.

Diese Aufgabe wird durch eine Radaufhängung gemäß Anspruch 1 gelöst. Durch die Erfindung wird das freie Schwingen der Räder gegenüber dem Fahrzeugrahmen mittels der Dämpfungselemente unterdrückt, da diese die Bewegung der Querlenker und damit der Räder gegenüber dem Fahrzeugrahmen dämpfen. Desweiteren verändert der Einsatz der Dämpfungselemente die Resonanzfrequenz der Querlenker-Rad-Kombination, sodass sich beispielsweise die Geschwindigkeit, bei der Chattering auftritt, ändert. Zudem ist die erfindungsgemäße Radaufhängung besonders bauteileffizient, weil auf ein Querlenkerpaar verzichtet werden kann, da seine Aufgabe von dem Federelement übernommen wird. Zusätzlich wird das Anbringen des Federelementes mitsamt seiner Aufhängung an einem der ansonsten üblichen Querlenkerpaare eingespart, was die Montage der Radaufhängung vereinfacht. Weiterhin ermöglicht die Anordnung der Dämpfungselemente eine einfache und effektive Dämpfung des Querlenkers gegenüber dem Fahrzeugrahmen, da die durch den Querlenker geleiteten Stöße und Schwingungen der Räder unmittelbar von den Dämpfungselementen aufgenommen werden.

Gemäß einer weiteren Ausführungsform können die Querlenker eines Querlenkerpaares eine gemeinsame Schwenkachse haben. Eine gemeinsame Schwenkachse vereinfacht die Neigemechanik des Fahrzeugrahmens und des Aufbaus erheblich.

Die wenigstens zwei Dämpfungselemente sind insbesondere Stoßdämpfer. Der Einsatz von Stoßdämpfern als Dämpfungselemente ermöglicht aufgrund der weiten Verfügbarkeit von Stoßdämpfern eine kostengünstige sowie zuverlässige Dämpfung des Querlenkers.

In einer Ausführungsvariante bildet das Federelement zusammen mit den wenigstens zwei Dämpfungselementen die Fahrzeugfederung an der entsprechenden Achse, was eine weitere Vereinfachung mit Kostenreduzierung darstellt.

Das Federelement ist beispielsweise eine Blattfeder, die kostengünstig herzustellen und sehr zuverlässig ist.

Gemäß einer Ausführungsform bildet die Radaufhängung die Vorderradaufhängung.

Die Erfindung betrifft ferner ein motorrad- oder rollerähnliches Neigefahrzeug mit zwei Vorderrädern, die an der Radaufhängung nach einem der vorhergehenden Ansprüche angebracht sind. Dieses
Neigefahrzeug weist aufgrund der vorteilhaften Radaufhängung kein Chattering und somit vergrößerte Fahrsicherheit und erhöhten Fahrkomfort gegenüber bekannten Neigefahrzeugen auf.

Das Neigefahrzeug ist beispielsweise heckangetrieben.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 stilisiert ein erfindungsgemäßes Neigefahrzeug mit Radaufhängung von oben,
- Figur 2 eine erfindungsgemäße Radaufhängung eines erfindungsgemäßen Neigefahrzeugs in Normallage während Geradeausfahrt,
- Figur 3 die erfindungsgemäße Radaufhängung nach Figur 2 während einer Kurvenfahrt,
- Figur 4 die erfindungsgemäße Radaufhängung nach Figur 2 mit ausgefedertem Federelement, und
- Figur 5 die erfindungsgemäße Radaufhängung nach Figur 2 mit eingefedertem Federelement.

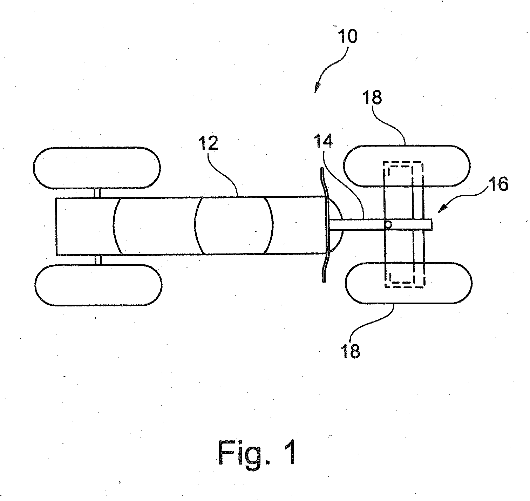

In Figur 1 ist ein motorrad- oder rollerähnliches, zweisitziges, mehrspuriges, heckgetriebenes Neigefahrzeug 10 gezeigt mit einem Aufbau 12, der mit einem Fahrzeugrahmen 14 gekoppelt ist. Der Fahrer nimmt den Rahmen 14 zwischen den Beinen auf. Die Radaufhängung 16 für die Vorderachse ist stilisiert dargestellt und umfasst ein in Fahrtrichtung linkes und ein rechtes Rad 18.

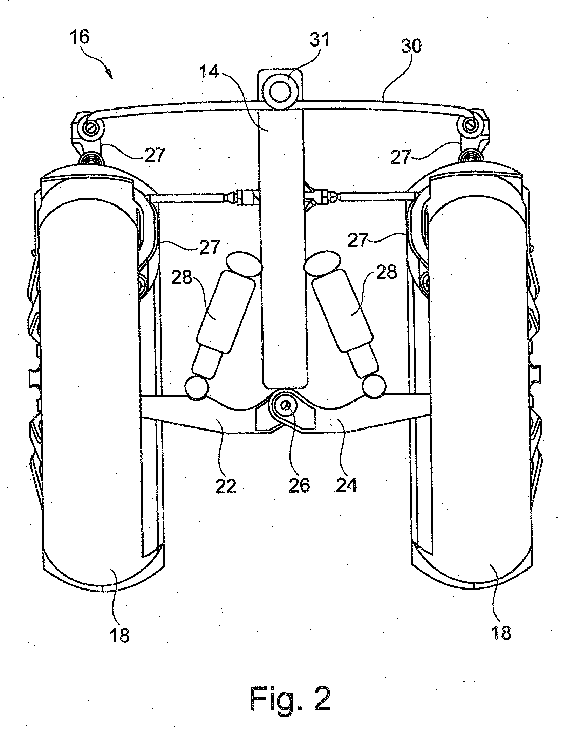

Figur 2 zeigt eine erfindungsgemäße, vorzugsweise vorderachsseitige Radaufhängung 16, die als Doppel-Querlenkerachse ausgebildet ist. Ein unteres Querlenkerpaar umfasst einen Querlenker 22 in Fahrtrichtung rechts und einen Querlenker 24 in Fahrtrichtung links, die über eine gemeinsame Schwenkachse 26 schwenkbar am Fahrzeugrahmen 14 angelenkt sind. Das jeweils andere Ende der Querlenker 22, 24 ist mit dem Rad 18, genauer dem Achsträger 27 der entsprechenden Fahrzeugseite gekoppelt.

Zwischen dem Fahrzeugrahmen 14 und jeweils einem der Querlenker 22, 24 ist je ein Dämpfungselement 28, vorzugsweise ein Stoßdämpfer, angeordnet. Die Dämpfungselemente 28 sind mit jeweils einem Ende am Fahrzeugrahmen 14 und mit dem anderen Ende am Querlenker 22, 24 der entsprechenden Fahrzeugseite angelenkt.

Ein oberes Querlenkerpaar ist als einstückiges Federelement 30, vorzugsweise als Blattfeder, ausgebildet. Das Federelement 30 ist in seiner Mitte über ein Lager 31 schwenkbar am Fahrzeugrahmen 14 gelagert, und seine Enden, die gegenüber der Lagerung am Fahrzeugrahmen 14 federnd ausgebildet sind, sind jeweils mit einem Achsträger 27 eines der Räder 18 verbunden.

Selbstverständlich ist die Erfindung nicht darauf begrenzt, dass das obere Querlenkerpaar als einstückiges, durchgehendes Federelement 30 ausgebildet ist und am unteren Querlenkerpaar Dämpfungselemente 28 vorgesehen sind. Ein als Federelement 30 ausgebildetes unteres Querlenkerpaar und am oberen Querlenkerpaar angeordnete Dämpfungselemente 28 sind ebenso denkbar, genauso wie eine Radaufhängung 16 mit mehr als zwei Querlenkerpaaren.

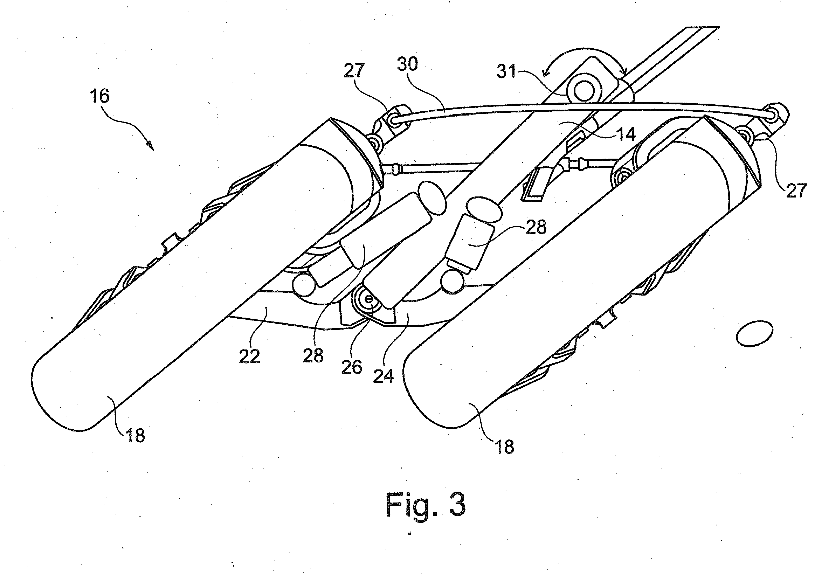

In den in Figuren 2 und 3 dargestellten Fahrsituationen des Neigefahrzeugs 10 dämpfen die Dämpfungselemente 28 Bewegungen der Querlenker 22, 24 um die Längsachse des Neigefahrzeugs 10. Dadurch unterdrücken die Dämpfungselemente 28 freie Schwingungen der Räder 18 gegenüber dem Fahrzeugrahmen 14, die zu Chattering führen würden, und verhindern eine Übertragung der Schwingung eines Rades 18 auf das andere Rad 18.

Die Dämpfungswirkung der Dämpfungselemente 28 besteht auch während Kurvenfahrten, wie beispielsweise in Figur 3 dargestellt. Dabei sind die Dämpfungselemente 28 unterschiedlich belastet, und das Federelement 30 ist gegenüber dem Fahrzeugrahmen 14 verschwenkt.

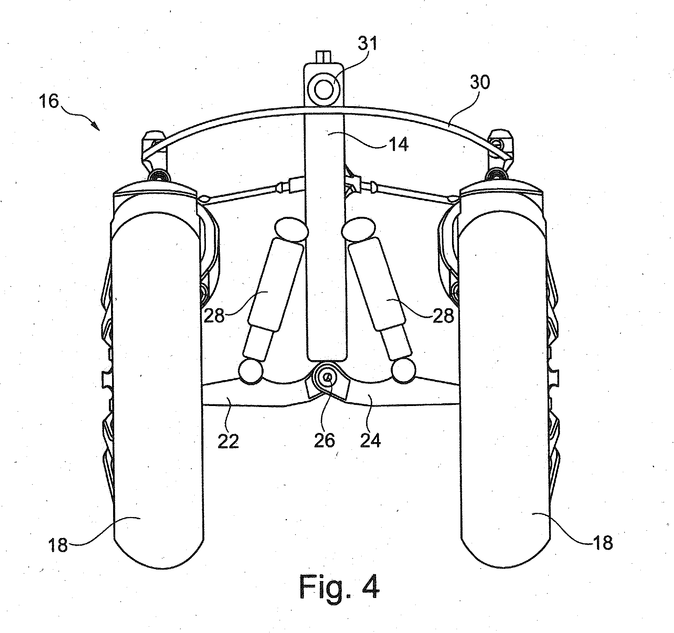

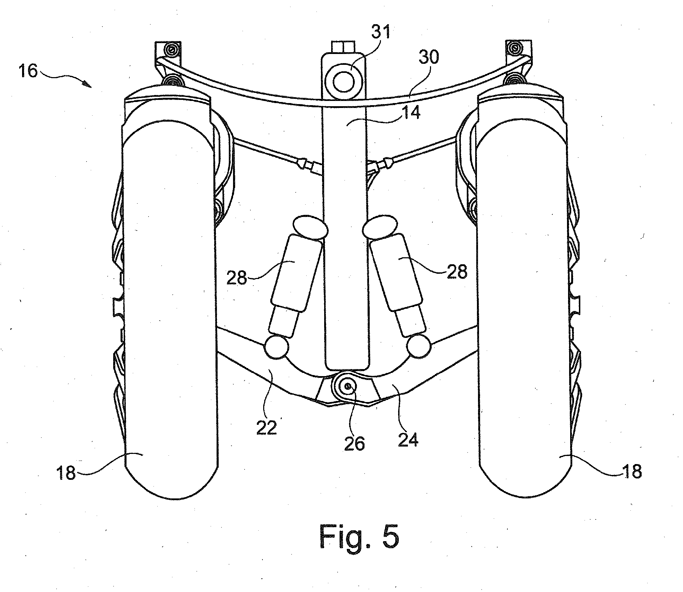

Das Federelement 30 kompensiert Unebenheiten der Fahrbahn und bildet zusammen mit den Dämpfungselementen 28 die Fahrzeugfederung. Beim Überfahren eines Schlagloch oder eines Steins wird die vertikale Position der Räder 18 gegenüber dem Fahrzeugrahmen 14 mitsamt Aufbau 12 verändert, und das Federelement 30 federt aus bzw. ein, wie in Figur 4 und Figur 5 dargestellt. Durch das Aus- bzw. Einfedern des Federelementes 30 wird der Stoß, der auf die Räder 18 wirkt, nicht auf den Fahrzeugrahmen 14 übertragen.

Die Rückstellung des Fahrzeugrahmens 14 in Normalposition gegenüber der Räder 18 erfolgt durch das Rückfedern des Federelementes 30. Diese Bewegung wird durch die Dämpfungselemente 28 gedämpft, sodass ein Nachschwingen des Fahrzeugrahmens 14 und des Aufbaus 12 verhindert wird. Somit wirken die Dämpfungselemente 28 zusammen mit dem Federelement 30 als eine Feder-Dämpfer-Kombination.

Die Dämpfungselemente 28 erfüllen somit zwei Aufgaben. Zum einen unterdrücken sie Chattering, zum anderen sind sie auch der dämpfende Teil der Fahrzeugfederung.

## Patentansprüche

1. Radaufhängung (16) eines mehrspurigen Neigefahrzeugs (10) mit wenigstens zwei Dämpfungselementen (28) und wenigstens einem Querlenkerpaar, das einen Querlenker (22) in Fahrtrichtung rechts und einen Querlenker (24) in Fahrtrichtung links umfasst, wobei einem Rad (18) einer Achse jeweils ein Querlenker (22, 24) und ein Dämpfungselement (28) zugeordnet ist, wobei zwischen einem Fahrzeugrahmen (14) und jeweils einem der Querlenker (22, 24) eines der Dämpfungselemente (28) angeordnet ist und die Radaufhängung (16) eine Doppel-Querlenkerachse aufweist, **dadurch gekennzeichnet, dass**
- ein Federelement (30) am Fahrzeugrahmen (14) schwenkbar gelagert ist, das das obere Querlenkerpaar bildet, wobei jeweils das eine Ende der wenigstens zwei Dämpfungselemente (28) an dem Fahrzeugrahmen (14) und das andere Ende jeweils an einem unteren Querlenker (22, 24) angelenkt ist, oder
- ein Federelement (30) am Fahrzeugrahmen (14) schwenkbar gelagert ist, das das untere Querlenkerpaar bildet, wobei jeweils das eine Ende der wenigstens zwei Dämpfungselemente (28) an dem Fahrzeugrahmen (14) und das andere Ende jeweils an einem oberen Querlenker (22, 24) angelenkt ist.

2. Radaufhängung nach Anspruch 1, **dadurch gekennzeichnet, dass** die Querlenker (22, 24) eines Querlenkerpaares eine gemeinsame Schwenkachse (26) haben.

3. Radaufhängung nach einem der vorhergehenden Ansprüche, **dadurch gekennzeichnet, dass** die wenigstens zwei Dämpfungselemente (28) Stoßdämpfer sind.

4. Radaufhängung nach einem der vorhergehenden Ansprüche, **dadurch gekennzeichnet, dass** der Rahmen (14) in Fahrtrichtung gesehen zwischen den unteren Querlenkern (22) angeordnet ist.

5. Radaufhängung nach einem der vorhergehenden Ansprüche, **dadurch gekennzeichnet, dass** das Federelement (30) zusammen mit den wenigstens zwei Dämpfungselementen (28) die Fahrzeugfederung bildet.

6. Radaufhängung nach einem der vorhergehenden Ansprüche, **dadurch gekennzeichnet, dass** das Federelement (30) eine Blattfeder ist.

7. Radaufhängung nach einem der vorhergehenden Ansprüche, **dadurch gekennzeichnet, dass** die Radaufhängung (16) die Vorderradaufhängung bildet.

8. Neigefahrzeug (10) mit wenigstens zwei Rädern (18), die an der Radaufhängung (16) nach einem der vorhergehenden Ansprüche angebracht sind.

9. Neigefahrzeug nach Anspruch 8, **dadurch gekennzeichnet, dass** das Neigefahrzeug (10) heckangetrieben ist.

10. Neigefahrzeug nach einem der vorhergehenden Ansprüche, **dadurch gekennzeichnet, dass** es motorrad- oder rollerähnlich aufgebaut ist, mit einem zwischen den Fahrerbeinen aufzunehmenden Rahmen (14).

## Claims

1. A wheel suspension (16) of a multi-track leaning vehicle (10) having at least two damping elements (28) and at least one pair of transverse links which comprises one transverse link (22) in the right-hand direction of travel and one transverse link (24) in the left-hand direction of travel, wherein one transverse link (22, 24) and one damping element (28) is associated in each case with one wheel (18) of an axle, wherein one of the damping elements (28) is arranged between a vehicle frame (14) and one of the transverse links (22, 24) in each case, and the wheel suspension (16) has a double wishbone axle, **characterised in that**
- a spring element (30) is pivotably mounted on the vehicle frame (14), which element forms the upper pair of transverse links, with in each case the one end of the at least two damping elements (28) being articulated to the vehicle frame (14) and the other end being articulated in each case to a lower transverse link (22, 24), or
- a spring element (30) is pivotably mounted on the vehicle frame (14), which element forms the lower pair of transverse links, with in each case the one end of the at least two damping elements. (28) being articulated to the vehicle frame (14) and the other end being articulated in each case to an upper transverse link (22, 24).

2. A wheel suspension according to Claim 1, **characterised in that** the transverse links (22, 24) of a pair of transverse links have a common pivot axis (26).

3. A wheel suspension according to one of the preceding claims, **characterised in that** the at least two damping elements (28) are shock absorbers.

4. A wheel suspension according to one of the preceding claims, **characterised in that** the frame (14), viewed in the direction of travel, is arranged between the lower transverse links (22).

5. A wheel suspension according to one of the preceding claims, **characterised in that** the spring element (30) together with the at least two damping elements (28) forms the vehicle suspension.

6. A wheel suspension according to one of the preceding claims, **characterised in that** the spring element (30) is a leaf spring.

7. A wheel suspension according to one of the preceding claims, **characterised in that** the wheel suspension (16) forms the front-wheel suspension.

8. A leaning vehicle (10) having at least two wheels (18) which are fixed to the wheel suspension (16) according to one of the preceding claims.

9. A leaning vehicle according to Claim 8, **characterised in that** the leaning vehicle (10) is a rear-wheel drive vehicle.

10. A leaning vehicle according to one of the preceding claims, **characterised in that** it is constructed similarly to a motorcycle or scooter, with a frame (14) which is to be accommodated between the rider's legs.

## Revendications

1. Suspension de roue (16) d'un véhicule inclinable (10) ayant plusieurs lignes de roues comprenant au moins deux éléments d'amortissement (28) et au moins une paire de bras oscillants transversaux comportant un bras oscillant transversal (22) droit dans la direction de déplacement et un bras oscillant transversal (24) gauche dans la direction de déplacement, à une roue (18) d'un essieu étant respectivement associés un bras oscillant transversal (22, 24) et un élément d'amortissement (28), entre le châssis (14) du véhicule et l'un respectif des bras oscillants transversaux (22, 24) étant monté l'un des éléments d'amortissement (28) et la suspension de roue (16) comprenant un essieu à bras oscillant transversal double,
**caractérisée en ce que**
- sur le châssis (14) du véhicule est monté pivotant un élément élastique (30), qui forme une paire de bras oscillants transversaux supérieure, l'une des extrémités des éléments d'amortissement (28) étant respectivement articulée sur le châssis (14) du véhicule tandis que l'autre extrémité est respectivement articulée sur un bras oscillant transversal inférieur (22, 24), ou
- sur le châssis (14) du véhicule est monté pivotant un élément élastique (30) qui forme une paire de bras oscillants transversaux inférieure, l'une des extrémités des éléments d'amortissement (28) étant respectivement articulée sur le châssis (14) du véhicule tandis que l'autre extrémité est respectivement articulée sur un bras oscillant transversal supérieur (22, 24).

2. Suspension de roue conforme à la revendication 1,
**caractérisée en ce que**
les bras oscillants transversaux (22, 24) d'une paire de bras oscillants transversaux ont un axe de pivotement commun (26).

3. Suspension de roue conforme à l'une des revendications précédentes,
**caractérisée en ce que**
les éléments d'amortissement (28) sont constitués par des amortisseurs de chocs.

4. Suspension de roue conforme à l'une des revendications précédentes,
**caractérisée en ce qu'**
observé dans la direction de déplacement le châssis (14) est monté entre les bras oscillants transversaux inférieurs (22).

5. Suspension de roue conforme à l'une des revendications précédentes,
**caractérisée en ce que**
l'élément élastique (30) forme la suspension du véhicule avec les éléments d'amortissement (28).

6. Suspension de roue conforme à l'une des revendications précédentes,
**caractérisée en ce que**
l'élément élastique (30) est un ressort à lames.

7. Suspension de roue conforme à l'une des revendications précédentes,
**caractérisée en ce que**
la suspension de roue (16) forme la suspension de la roue avant.

8. Véhicule inclinable (10) comprenant au moins deux roues (18) qui sont montées sur une suspension de roue (16) conforme à l'une des revendications précédentes.

9. Véhicule inclinable conforme à la revendication 8,
**caractérisé en ce qu'**
il est à traction arrière.

10. Véhicule inclinable conforme à l'une des revendications précédentes,
**caractérisée en ce qu'**
il est réalisé de façon similaire à une moto ou à un scooter avec un châssis (14) logé entre les jambes du conducteur.
